# EUROPÄISCHE PATENTSCHRIFT

(11) **EP 2 846 070 B1**
(45) Veröffentlichungstag und Bekanntmachung des Hinweises auf die Patenterteilung: **12.07.2017**
(21) Anmeldenummer: 14001598.3
(22) Anmeldetag: 06.05.2014
(51) Int. Cl.: F16K 31/06

(54) **Magnetventil**
Solenoid valve
Électrovanne

(30) Priorität: 16.07.2013 DE 102013011855
(43) Veröffentlichungstag der Anmeldung: 11.03.2015
(73) Patentinhaber: FESTO AG & Co. KG, 73734 Esslingen (DE)
(72) Erfinder: Blassmann, Lars, D-73732 Esslingen (DE); Lenz, Markus, D-71384 Weinstadt (DE)
(74) Vertreter: Patentanwälte Magenbauer & Kollegen Partnerschaft mbB

(56) Entgegenhaltungen:
- WO-A1-2013/008527
- US-A1- 2011 168 279
- US-B1- 6 511 042

## Beschreibung

Die Erfindung betrifft ein Magnetventil, mit einer Elektromagneteinrichtung, die einen in einem Ventilgehäuse angeordneten, zu einer linearen Hubbewegung in Achsrichtung einer Hauptachse antreibbaren Anker aufweist, der einer Polflächenordnung der Elektromagneteinrichtung vorgelagert ist, zu der hin er bei Aktivierung der Elektromagneteinrichtung gezogen wird und der ein Ventilglied antreibt oder bildet, wobei der Anker eine Längsgestalt mit rechtwinkelig zu der Hauptachse orientierter Längsachse aufweist und durch Federmittel des Magnetventils in einer zu der Polflächenanordnung beabstandeten Grundstellung gehalten wird, wobei die Federmittel eine rahmenförmige Blattfeder aufweisen, die den Anker an seiner rechtwinkelig zur Hauptachse orientierten Seitenfläche flankiert und die zwei sich aus jeweils zwei gegenüberliegenden Federschenkeln zusammensetzende Federschenkelpaare aufweist, wobei die Federschenkel des einen Federschenkelpaares am Ventilgehäuse fixiert sind und die Federschenkel des anderen Federschenkelpaares im Bereich einander quer zu der Hauptachse gegenüberliegender Seitenflächenabschnitte des Ankers auf den Anker einwirken.

Ein aus der EP 1 748 238 A1 bekanntes Magnetventil verfügt über eine Elektromagneteinrichtung mit einem U-förmigen Flussleitkörper, der eine aus zwei in die gleiche Richtung weisenden Polflächen bestehende Polflächenanordnung definiert, der ein länglicher, plattenförmig gestalteter Anker gegenüberliegt. Der Anker trägt oder bildet ein Ventilglied, das in einer Grundstellung an einem Ventilsitz anliegt, von dem es bei Aktivierung der Elektromagneteinrichtung aufgrund der sich ausbildenden Magnetkraft abhebt. Die Einhaltung der Grundstellung resultiert allein aus dem im Betrieb des Magnetventils auf den Anker einwirkenden Fluiddruck, was bei Druckschwankungen oder auch bei Überkopfeinbauten des Magnetventils problematisch sein kann.

Aus der DE 299 05 883 U1 ist ein ähnlich aufgebautes Magnetventil bekannt, das mit einer nicht näher beschriebenen Federanordnung ausgestattet sein kann, die den Anker in die Grundstellung vorspannt.

Ein aus der WO 2013/008527 A1 bekanntes Magnetventil der eingangs genannten Art verfügt über einen eine Längsgestalt aufweisenden Anker, an dem mittels einer Federeinrichtung ein Ventilglied festgeklemmt ist. Die Federeinrichtung dient auch zur federnden Aufhängung des Ankers am Ventilgehäuse des Magnetventils. Die Federeinrichtung enthält einen mittleren Abschnitt, der als rahmenförmige Blattfeder gestaltet ist, die den Anker an zwei einander entgegengesetzten Abschnitten seiner Seitenfläche mit zwei Federschenkeln flankiert. An zwei anderen Federschenkeln, die dem Anker an der dem Ventilglied zugewandten Seite vorgelagert sind, ist jeweils ein streifenförmiger Federarm angeordnet, der sich am Ventilgehäuse abstützt.

Die US 6 511 042 B1 offenbart ein Magnetventil mit einem plattenförmigen Anker, an dem an einer seiner Plattenflächen eine rahmenförmige Blattfeder befestigt ist, die an einander entgegengesetzten Seiten über den Anker hinausragt und an einem Ventilsitzkörper befestigt ist.

Der Erfindung liegt die Aufgabe zu Grunde, ein Magnetventil der eingangs genannten Art zu schaffen, das bei kompakten Abmessungen eine zuverlässige Einhaltung der Grundstellung im deaktivierten Zustand der Elektromagneteinrichtung gewährleistet.

Zur Lösung dieser Aufgabe ist in Verbindung mit den eingangs genannten Merkmalen vorgesehen, dass der Anker an seiner rechtwinkelig zur Hauptachse orientierten Seitenfläche ringsum von der rahmenförmigen Blattfeder umrahmt ist.

Das erfindungsgemäße Magnetventil ist mit Federmitteln ausgestattet, die bei deaktivierter Elektromagneteinrichtung eine zuverlässige Einhaltung der Grundstellung des Ankers und mithin des dem Anker zugeordneten Ventilgliedes gewährleisten. Bei Aktivierung der Elektromagneteinrichtung führt der Anker entgegen der Federkraft der ihn normalerweise in der Grundstellung haltenden Federmittel eine sich aus der Grundstellung verlagernde Hubbewegung aus, um bei anschließender Deaktivierung der Elektromagneteinrichtung durch die Federkraft wieder in die Grundstellung zurückzukehren. Vorzugsweise ist der Anker durch die Federmittel von der Polflächenanordnung weg gerichtet in die Grundstellung vorgespannt, sodass er auch in der Grundstellung von einer Federkraft der Federmittel beaufschlagt ist. Indem die Federmittel eine den Anker umrahmende Blattfeder aufweisen, die mit ihren Federschenkeln zwischen dem Ventilgehäuse und dem Anker wirksam ist, können die erforderlichen Federkräfte auf engstem Raum erzeugt werden und ohne das Bauvolumen der Elektromagneteinrichtung zu beeinträchtigen, so dass trotz des Vorhandenseins der Federmittel ein starkes Magnetfeld generiert werden kann. Dies ermöglicht es andererseits auch, die Baugröße des Magnetventils bei vergleichbarer Durchflussleistung zu reduzieren.

Vorteilhafte Weiterbildungen der Erfindung gehen aus den Unteransprüchen hervor.

Zweckmäßigerweise ist die Elektromagneteinrichtung mit einem U-förmigen, auch als Kernkörper bezeichenbaren Flussleitkörper ausgestattet, der zwei zueinander parallele Schenkelabschnitte aufweist, deren untereinander in die gleiche Richtung orientierte Stirnflächen jeweils eine Polfläche der Polflächenanordnung bilden. Der Flussleitkörper ist von einer Spuleneinrichtung umgeben, die bestrombar ist, um ein Magnetfeld zu erzeugen, das den Flussleitkörper und den dem Flussleitkörper vorgelagerten Anker durchsetzt. Bedingt durch die Mehrfachanordnung von Polflächen in Verbindung mit dem eine Längsgestalt aufweisenden Anker ergibt sich eine hohe Anzugskraft in Verbindung mit einer symmetrischen Krafteinleitung und dementsprechend kaum einer Neigung zum Verkanten während der Hubbewegung. Die Spuleneinrichtung verfügt zweckmäßigerweise über zwei Spuleneinheiten, die jeweils einen der beiden Schenkelabschnitte des Flussleitkörpers umschließen. Der Flussleitkörper kann einteilig oder mehrteilig ausgeführt sein.

Bei einer bevorzugten mehrteiligen Ausführungsform des Flussleitkörpers sind die beiden Schenkelabschnitte von eigenständigen Schenkelkörpern gebildet, die mit einem separaten, die U-Konfiguration hervorrufenden Stegkörper kombiniert sind. Wenn die Schenkelkörper einen rechteckigen Querschnitt mit unterschiedlichen Seitenlängen aufweisen, können sie mit unterschiedlicher Ausrichtung installiert werden, um Magnetventile unterschiedlicher Breite zu realisieren.

Der Anker ist zweckmäßigerweise zumindest in dem von der Blattfeder umrahmten Bereich länglich plattenförmig ausgebildet. Er kann insbesondere zumindest im Wesentlichen rechteckig konturiert sein. Insbesondere an seinen Schmalseiten verfügt er zweckmäßigerweise über flügelartige Vorsprünge, an denen die Blattfeder angreift, um die Federkraft in den Anker einzuleiten.

Bevorzugt hat die Blattfeder, wenn man sie in Achsrichtung der Hauptachse betrachtet, eine rechteckige Rahmenstruktur. Dies ist insbesondere dann von Vorteil, wenn der Anker zumindest in dem von der Blattfeder umrahmten Bereich zumindest im Wesentlichen ebenfalls rechteckig konturiert ist.

Vorzugsweise hat die Blattfeder eine Längsgestalt und ist folglich länger als breit. Auf diese Weise sind die Federschenkel des einen Federschenkelpaares länger als die Federschenkel des anderen Federschenkelpaares. Die Blattfeder ist bevorzugt so um den Anker herum platziert, dass ihre längeren Federschenkel den Längsseiten des Ankers zugeordnet sind und ihre kürzeren Federschenkel den Schmalseiten des Ankers. Während die Federschenkel des einen Federschenkelpaares am Ventilgehäuse fixiert sind, wirken die Federschenkel des anderen Federschenkelpaares auf den Anker ein und sind bezüglich den fixierten Bereichen der anderen Federschenkel elastisch biegbar. Die Blattfeder ist insbesondere so installiert, dass sie den Anker mit einer Vorspannung in der Grundstellung hält.

Durch die Rahmenstruktur der Blattfeder kann eine besonders gleichförmige Krafteinleitung in den Anker realisiert werden. Auf diese Weise wird die Kippneigung des Ankers minimiert und man kann auf zur Linearführung des Ankers dienende separate Führungsmittel verzichten oder zumindest derartige Führungsmaßnahmen auf ein geringes Maß reduzieren.

Indem die Blattfeder den Anker umrahmt, so dass man quasi von einer konzentrischen Anordnung sprechen kann, lassen sich kompakte Abmessungen des Ventilgehäuses in Achsrichtung der Hauptachse realisieren. Es ist insbesondere eine Konstruktion möglich, bei der die Einbauhöhe für die Blattfeder die in Achsrichtung der Hauptachse gemessene Bauhöhe des Ankers nicht überschreitet.

Obgleich es prinzipiell möglich wäre, die Blattfeder an ihren kürzeren Federschenkeln am Ventilgehäuse zu fixieren, wird es als zweckmäßig erachtet, die Fixierung an den längeren Federschenkeln vorzunehmen. Auf diese Weise lässt sich eine relativ große Federlänge zwischen den gehäusefest fixierten Bereichen und den auf den Anker einwirkenden schmalseitigen Federschenkeln verwirklichen, was die Auslegung der Federkräfte begünstigt.

Die am Ventilgehäuse fixierten Federschenkel sind zweckmäßigerweise in ihrem längsmittigen Bereich nur lokal bzw. eng begrenzt am Ventilgehäuse fixiert, wobei sie sich ausgehend von diesem fixierten Bereich schräg nach außen und zugleich in Richtung zu der Polflächenanordnung erstrecken. Die mit dem Anker zusammenwirkenden Federschenkel liegen dabei in Achsrichtung der Hauptachse näher bei der Polflächenanordnung als die am Ventilgehäuse fixierten Bereiche der anderen Federschenkel. Bevorzugt ist die Blattfeder so gestaltet, dass die am Ventilgehäuse fixierten Federschenkel zur Seite der Polflächenanordnung hin konkav gewölbt sind.

Zur Einleitung der Federkräfte in den Anker ist der Anker zweckmäßigerweise mit Abstützflächen ausgestattet, an denen der betreffende Federschenkel anliegt. Dabei sind die Abstützflächen zweckmäßigerweise in der Hubrichtung orientiert, in der sich der Anker beim Entfernen aus der Grundstellung verlagert. Vorzugsweise ist der Anker allein durch die Blattfeder und insbesondere ausschließlich durch die die Federkraft in den Anker einleitenden Federschenkel am Ventilgehäuse fixiert.

Die dem Anker zugewandte Innenfläche der Blattfeder kann zumindest partiell als Führungsfläche ausgebildet sein, die den Anker seitlich abstützt und bei Ausführung der Hubbewegung führt. Auf diese Weise kann auf separate Führungsmittel am Ventilgehäuse unter Umständen verzichtet werden.

Dem Ventilglied ist bevorzugt mindestens eine zu steuernde Kanalöffnung eines das Ventilgehäuse durchsetzenden Ventilkanals zugeordnet. Es ist insbesondere eine Ausführungsform möglich, bei der dem Ventilglied ein eine zu steuernde Kanalöffnung eines Ventilkanals umrahmender Ventilsitz gegenüberliegt, an den das Ventilglied in seiner Grundstellung durch die Blattfeder angedrückt wird.

Das erfindungsgemäße Konzept lässt sich mit Magnetventilen unterschiedlicher Funktionalitäten realisieren. Es eignet sich insbesondere sowohl für eine Ausgestaltung als 2/2-Wegeventil als auch für eine Ausgestaltung als 3/2-Wegeventil.

Das Ventilgehäuse des Magnetventils enthält zweckmäßigerweise einen Kanalkörper, der von mindestens einem Ventilkanal durchsetzt ist, der durch das Ventilglied steuerbar ist. Dieser Kanalkörper ist zweckmäßigerweise mit den Anker und der Blattfeder zu einer Baueinheit zusammengefasst, indem die Blattfeder an dem Kanalkörper fixiert ist und der Anker zwischen der Blattfeder und dem Kanalkörper eingespannt ist. Diese Baueinheit ermöglicht eine Funktionsprüfung im noch nicht montierten Zustand der anderen Bestandteile der Elektromagneteinrichtung, was den Herstellungsaufwand minimiert, weil eventuelle Fehlteile frühzeitig aussortiert werden können, insbesondere bevor das Magnetventil komplett zusammengebaut ist.

Vor allem in diesem Zusammenhang ist es zweckmäßig, wenn das Magnetventil über einen an den Kanalkörper angebauten bzw. anbaubaren Antriebskopf aufweist, der alle Komponenten der Elektromagneteinheit mit Ausnahme des Ankers aufweist. Die Blattfeder ist bevorzugt unabhängig von dem Antriebskopf am Kanalkörper fixiert, so dass der Kanalkörper, der Anker und die Blattfeder auch ohne angebauten Antriebskopf eine hinsichtlich der Steuerungsfunktion funktionsbereite Einheit darstellen.

Nachstehend wird die Erfindung anhand der beiliegenden Zeichnung näher erläutert. In dieser zeigen:

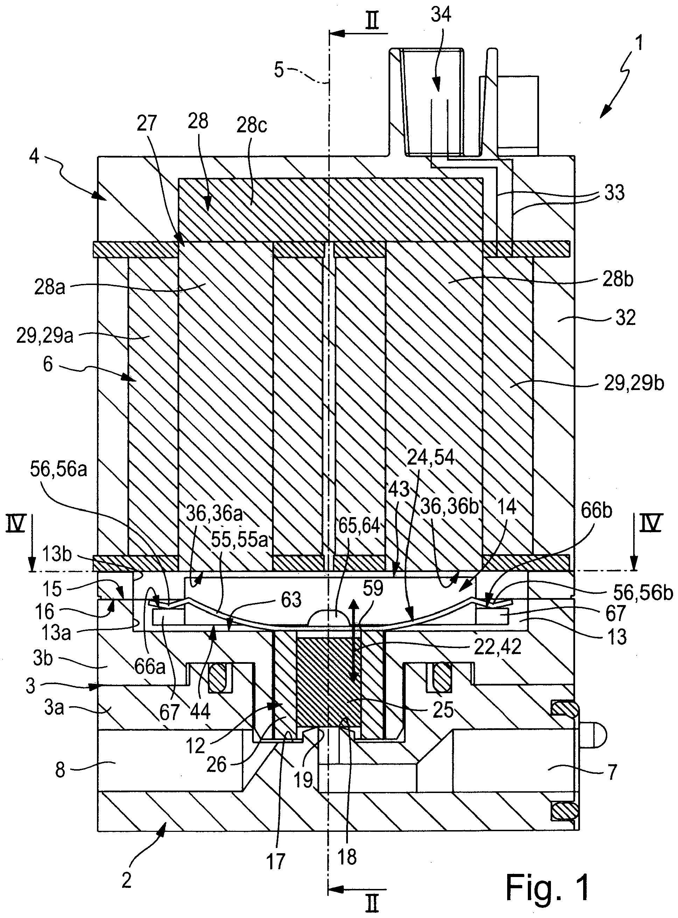

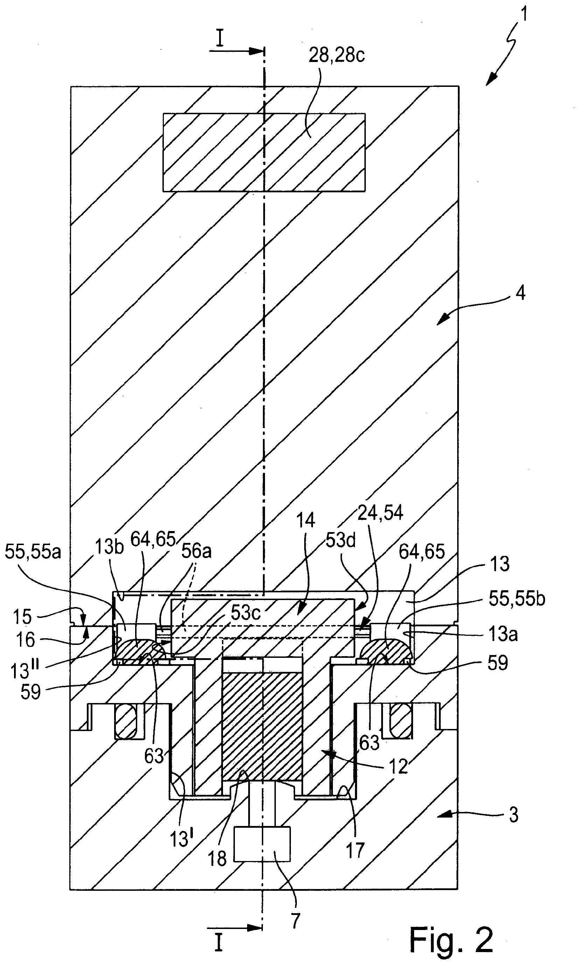

- Figur 1: einen Längsschnitt durch eine bevorzugte Ausführungsform des erfindungsgemäßen Magnetventils gemäß der abgekröpften Schnittlinie I-I aus Figur 2,
- Figur 2: einen weiteren Längsschnitt durch das Magnetventil in einer bezüglich der Schnittebene der Figur 1 um 90° verdrehten Schnittebene gemäß Schnittlinie II-II aus Figur 1,

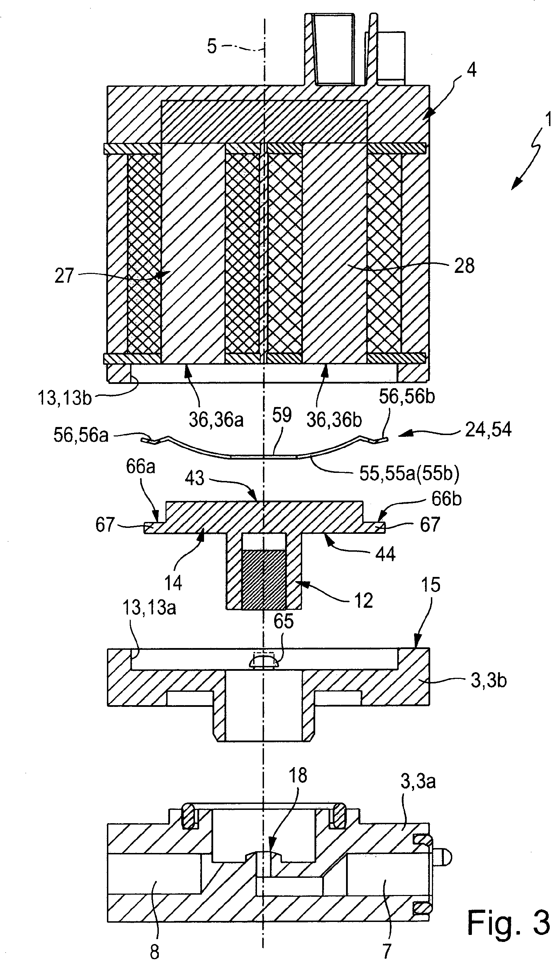

- Figur 3: eine Explosionsdarstellung des Magnetventils der Figuren 1 und 2 im Längsschnitt,

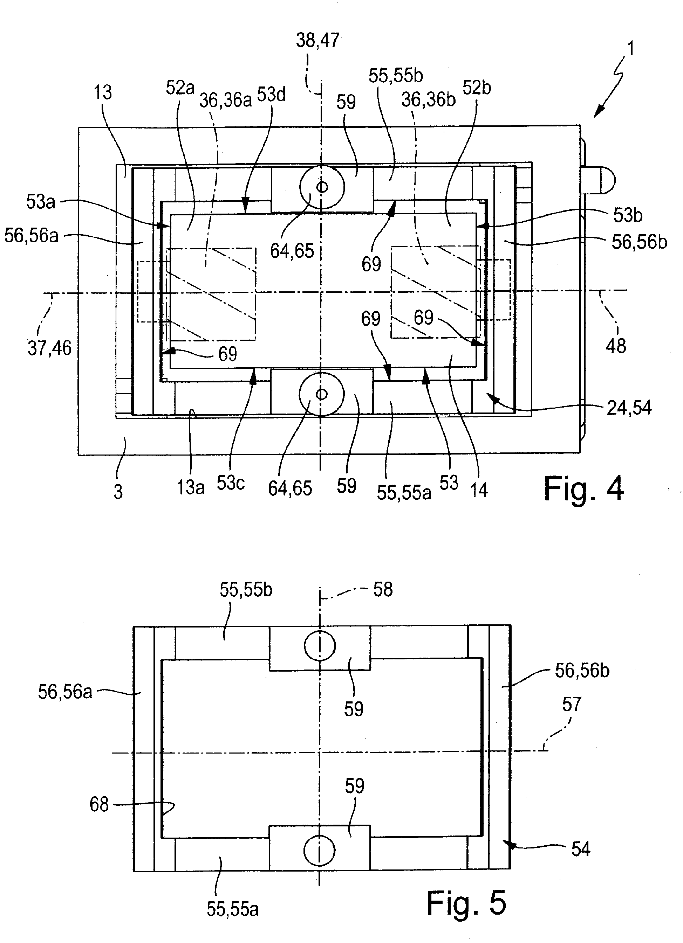

- Figur 4: einen Querschnitt durch das Magnetventil gemäß Schnittlinie IV-IV aus Figur 1, wobei die Schnittebene zwischen einem Antriebskopf und einem Kanalkörper des Magnetventils liegt,
- Figur 5: eine Einzeldarstellung der bei dem Magnetventil verwendeten rahmenförmigen Blattfeder in einer Draufsicht,

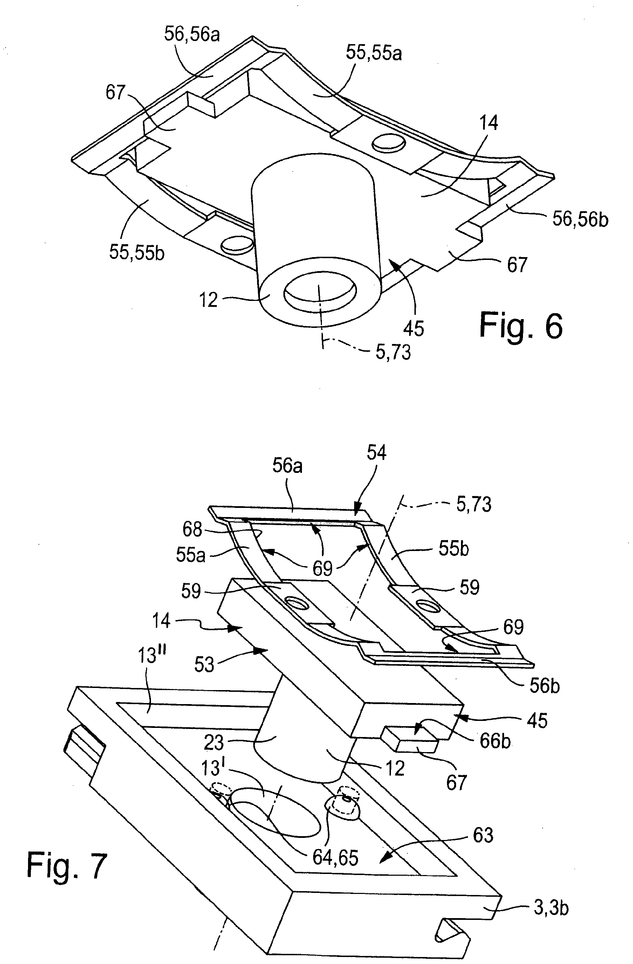

- Figur 6: eine perspektivische Einzeldarstellung einer sich aus dem Anker, einem Ventilglied und der Blattfeder zusammensetzenden Baugruppe, und
- Figur 7: eine Einzeldarstellung von Komponenten des Magnetventils in einer perspektivischen Explosionsdarstellung, wobei die Blattfeder und der mit dem Ventilglied zu einer Baueinheit zusammengefasste Anker unmittelbar vor der Fixierung an einem Kanalkörper gezeigt sind.

Das in seiner Gesamtheit mit Bezugsziffer 1 bezeichnete Magnetventil verfügt über ein mehrteiliges Ventilgehäuse 2, das sich zweckmäßigerweise aus einem seinerseits mehrteiligen Kanalkörper 3 und einem bevorzugt lösbar an dem Kanalkörper 3 montierten Antriebskopf 4 zusammensetzt.

Der Kanalkörper 3 und der Antriebskopf 4 sind in Achsrichtung einer Hauptachse 5, bei der es sich insbesondere um eine Hochachse des Magnetventils 1 handelt, aneinander angesetzt.

Der Antriebskopf 4 enthält Komponenten einer Elektromagneteinrichtung 6. Der Kanalkörper 3 ist von mehreren Ventilkanälen 7, 8 durchsetzt, die mittels der Elektromagneteinrichtung 6 und eines beweglichen Ventilgliedes 12 hinsichtlich ihres Fluiddurchflusses steuerbar sind.

In dem Ventilgehäuse 2 ist eine Ventilkammer 13 ausgebildet, in der sich das Ventilglied 12 und ein zur Betätigung des Ventilgliedes 12 dienender beweglicher Anker 14 der Elektromagneteinrichtung 6 befinden. Der Anker 14 besteht aus einem weichmagnetischen Material.

Die Ventilkammer 13 wird beim Ausführungsbeispiel gemeinsam begrenzt von dem Kanalkörper 3 und dem Antriebskopf 4.

Der Kanalkörper 3 hat eine in Achsrichtung der Hauptachse 5 weisende, dem Antriebskopf 4 zugewandte Oberseite 15. In dem Kanalkörper 3 ist eine zu der Oberseite 15 hin offene Ausnehmung 13a ausgebildet, die die Ventilkammer 13 zumindest teilweise bildet. Es ist möglich, die Ausnehmung 13a so zu realisieren, dass sie die Gesamtheit der Ventilkammer 13 repräsentiert. Eine andere Ausführungsform, die beim Ausführungsbeispiel verwirklicht ist, sieht an einer dem Kanalkörper 3 zugewandten Unterseite 16 des Antriebskopfes 4 eine weitere, zweite Ausnehmung 13b vor, die in die Ausnehmung 13a des Kanalkörpers 3 übergeht und gemeinsam mit dieser die Ventilkammer 13 definiert. Auf diese Weise ist die Ventilkammer 13 bei abgenommenem Antriebskopf 4 gut zugänglich.

Einer der Ventilkanäle 7 mündet mit einer in Achsrichtung der Hauptachse 5 orientierten, durch das Ventilglied 12 steuerbaren Kanalöffnung 19 im Bereich eines Bodens 17 der im Kanalkörper 3 ausgebildeten ersten Ausnehmung 13a in die Ventilkammer 13 ein. Diese Kanalöffnung 19 ist von einem bevorzugt axial erhaben ausgebildeten Ventilsitz 18 umrahmt, der an dem Kanalkörper 3 ausgebildet ist. Mindestens ein weiterer Ventilkanal 8 mündet ebenfalls in die Ventilkammer 13 ein.

Der steuerbaren Kanalöffnung 19 liegt innerhalb der Ventilkammer 13 das unter Ausführung einer durch einen Doppelpfeil angedeuteten Hubbewegung 22 in Achsrichtung der Hauptachse 5 linear hin und her bewegbare Ventilglied 12 gegenüber. Das Ventilglied 12 kann eine an dem Ventilsitz 18 anliegende und dabei die Kanalöffnung 19 verschließende Schließstellung einnehmen, bei der es sich vorzugsweise um eine durch Federmittel 24 stabilisierte Grundstellung handelt. Exemplarisch umfasst das Ventilglied 12 ein aus einem Dichtmaterial, vorzugsweise ein Elastomermaterial bestehendes Dichtelement 25, das in der erwähnten Schließstellung dichtend am Ventilsitz 18 anliegt. Zweckmäßigerweise enthält das Ventilglied 12 außerdem einen exemplarisch hülsenförmig ausgebildeten Halteabschnitt 26, in oder an dem das Dichtelement 25 fixiert ist.

Mit Hilfe der bereits angesprochenen Elektromagneteinrichtung 6 kann die Hubbewegung 22 des Ventilgliedes 12 hervorgerufen werden, um das Ventilglied 12 wahlweise in der Schließstellung oder in einer von dem Ventilsitz 18 abgehobenen Offenstellung zu positionieren. In der Offenstellung besteht durch die Ventilkammer 13 hindurch eine freie Fluidverbindung zwischen den beiden Ventilkanälen 7, 8, die in der Schließstellung unterbrochen ist. Auf diese Weise kann das Magnetventil 1 des Ausführungsbeispiels als 2/2-Wegeventil genutzt werden.

Bei einer nicht gezeigten Ausführungsform münden in die Ventilkammer 3 mehr als zwei Ventilkanäle 7, 8 ein, von denen mehrere über eine durch das Ventilglied 12 steuerbare Kanalmündung verfügen, so dass sich eine höherwertige Ventilfunktion realisieren lässt, beispielsweise ein 3/2-Wegeventil.

Die Elektromagneteinrichtung 6 enthält eine bevorzugt als Bestandteil des Antriebskopfes 4 ausgebildete Steuereinheit 27, die über einen einen magnetischen Fluss leitenden Flussleitkörper 28 und eine diesem Flussleitkörper 28 zugeordnete, elektrisch bestrombare Spuleneinrichtung 29 verfügt. Der bevorzugt aus einem weichmagnetischen und insbesondere einem ferromagnetischen Material bestehende Flussleitkörper 28 ist zumindest partiell von der Spuleneinrichtung 29 umschlossen.

Die Steuereinheit 27 ist zweckmäßigerweise in einem Kopfgehäuse 32 des Antriebskopfes 4 untergebracht, bei dem es sich zweckmäßigerweise um einen Gehäusebestandteil des Ventilgehäuses 2 handelt. Eine mit der Spuleneinrichtung 29 verbundene elektrische Leiteranordnung 33 ist zu einer außen am Kopfgehäuse 32 angeordneten elektromechanischen Anschlusseinheit 34 geführt, die mit einer externen Betätigungseinrichtung verbindbar ist, von der die Spuleneinrichtung 29 ihre elektrische Betätigungsenergie bezieht. Die Betätigungseinrichtung ist zweckmäßigerweise Bestandteil einer externen elektronischen Steuereinrichtung.

Das Kopfgehäuse 32 ist im Bereich der Unterseite 16 unter Ausbildung der zweiten Ausnehmung 13b offen. Indem der Antriebskopf 4 mit der Unterseite 16 voraus an die Oberseite des Kanalkörpers 3 angesetzt ist, ergibt sich ein geschlossenes Gehäuse, in dem die Elektromagneteinrichtung 6 gekapselt untergebracht ist.

Ein weiterer Bestandteil der Elektromagneteinrichtung 6, der von dem beweglichen Anker 14 gebildet ist, ist in der Ventilkammer 13 angeordnet und der Spuleneinrichtung 29 an ihrer dem Kanalkörper 3 zugewandten Unterseite vorgelagert.

Die Elektromagneteinrichtung 6 verfügt über eine von dem Flussleitkörper 28 gebildete, exemplarisch von zwei gesonderten Polflächen 36a, 36b gebildete Polflächenanordnung 36. Die Polflächenanordnung 36 ist von mindestens einer dem Anker 14 zugewandten Stirnfläche des Flussleitkörpers 28 gebildet. Im elektrisch deaktivierten Zustand der Elektromagneteinrichtung 6 ist der bevorzugt aus einem weichmagnetischen und insbesondere aus einem ferromagnetischem Material bestehende Anker 14 der Polflächenanordnung 36 mit geringem Abstand in Achsrichtung der Hauptachse 5 vorgelagert.

Vorzugsweise ist der Flussleitkörper 28 so ausgebildet, dass er wenigstens zwei in die gleiche Richtung weisende und in Achsrichtung der Hauptachse 5 zweckmäßigerweise auf gleicher Höhe liegende Polflächen 36a, 36b besitzt. Diese beiden Polflächen 36a, 36b sind in einer zu der Hauptachse 5 rechtwinkeligen Richtung, die im Folgenden als Längsrichtung bezeichnet wird und mit der Achsrichtung einer zu der Hauptachse 5 rechtwinkeligen Längsachse 37 zusammenfällt, beabstandet zueinander angeordnet. Bei dieser Längsachse 37 handelt es sich zweckmäßigerweise auch um die Längsachse des Ventilgehäuses 2.

Eine zu der Längsachse 37 und zu der Hauptachse 5 rechtwinkelige Achse sei im Folgenden als Querachse 38 bezeichnet. Bei ihr handelt es sich vorzugsweise um die Querachse des Ventilgehäuses 2.

Der auch als Kern der Elektromagneteinrichtung 6 bezeichenbare Flussleitkörper 28 ist zweckmäßigerweise U-förmig gestaltet. Er hat bevorzugt zwei zu der Hauptachse 5 parallele und dabei zueinander beabstandete Schenkelabschnitte 28a, 28b, deren dem Kanalkörper 3 zugewandte Stirnflächen jeweils eine der Polflächen 36a, 36b bilden und die an den einander entgegengesetzten Seiten durch einen die U-Gestalt vervollständigenden Stegabschnitt 28c miteinander verbunden sind.

Der Flussleitkörper 21 kann einstückig oder mehrteilig aufgebaut sein. Beispielsweise kann er durch mehrere aneinander gesetzte Ankerbleche einen Schichtaufbau haben. Bei der bevorzugten Ausgestaltung des Ausführungsbeispiels sind die beiden Schenkelabschnitte 28a, 28b und der Stegabschnitt 28c als ursprünglich drei separate Körper ausgebildet, die man als Schenkelkörper und Stegkörper bezeichnen kann und die aneinandergesetzt sind. Dies eröffnet die Möglichkeit, den Flussleitkörper 28 modular aufzubauen. Es besteht die Möglichkeit, als separate Stegkörper ausgebildete Schenkelabschnitte 28a, 28b mit rechteckigem Querschnitt mit unterschiedlichen Seitenlängen auszubilden, so dass sie bezüglich ihrer zur Hauptachse 5 parallelen Längsachse wahlweise in um 90° verdrehten Ausrichtungen installierbar sind, was es insbesondere ermöglicht, die Querabmessungen des Magnetventils 1 zur Veränderung des Rastermaßes bei der Herstellung des Magnetventils 1 nach Bedarf auszuwählen.

Durch abwechselnde elektrische Aktivierung und Deaktivierung der Elektromagneteinrichtung 6 kann der Anker 22 zu einer linearen Hubbewegung 42 in Achsrichtung der Hauptachse 5 angetrieben werden. Bei der Aktivierung der Elektromagneteinrichtung 6 wird er durch das den Flussleitkörper 28 und den Anker 14 durchsetzende Magnetfeld zu der Polflächenanordnung 36 hingezogen, wobei die Stellkraft der Federmittel 24 überwunden wird. Bei anschließender Deaktivierung der Elektromagneteinrichtung 6 wird der Anker 14 von den Federmitteln 24 wieder von der Polflächenanordnung 36 weggedrückt.

Indem der Anker 14 mit dem Ventilglied 12 antriebsmäßig gekoppelt ist, resultiert aus der Hubbewegung 42 des Ankers 14 die oben erwähnte Hubbewegung 22 des Ventilgliedes 12. Beim Ausführungsbeispiel ergibt sich die antriebsmäßige Kopplung durch eine feste Verbindung des Ventilgliedes 12 mit dem Anker 14. Bei einem nicht gezeigten Ausführungsbeispiel ist das Ventilglied 12 unmittelbar von dem beweglichen Anker 14 gebildet. Es besteht im Übrigen auch die Möglichkeit, den Anker 14 und das Ventilglied 12 als separate Komponenten auszubilden, die beispielsweise durch geeignete Zwischenglieder antriebsmäßig miteinander gekoppelt sind.

Der Anker 14 hat eine der Polflächenanordnung 36 zugewandte Oberseite 43 und eine diesbezüglich entgegengesetzt orientierte Unterseite 44. Das Ventilglied 12 ist zweckmäßigerweise an der Unterseite des Ankers 14 angeordnet. Beim Ausführungsbeispiel ist hierzu der hülsenförmige Halteabschnitt 26 einstückig mit dem Anker 14 ausgebildet und zweckmäßigerweise koaxial zu der Hauptachse 5 ausgerichtet. In einer Seitenansicht ergibt sich somit eine Anker-Ventilglied-Baueinheit 45 mit im Wesentlichen T-förmiger Gestalt. Das Ventilglied 12 wird an einander entgegengesetzten Seiten von dem Anker 14 überragt.

Der Anker 14 hat eine Längsgestalt mit rechtwinkelig zu der Hauptachse 5 orientierter Längsachse 46. Er ist derart in der Ventilkammer 13 angeordnet, dass seine Längsachse 46 parallel zu der erwähnten Längsachse 37 verläuft und insbesondere in einer Arbeitsebene 48 verläuft, die von der Hauptachse 5 und von den beiden Längsachsen 37, 46 aufgespannt ist.

Auf diese Weise liegen beide Polflächen 36a, 36b der Oberseite 43 des Ankers 14 gegenüber. Vorzugsweise sind die beiden Polflächen 36a, 36b den beiden einander entgegengesetzt in Achsrichtung der Längsachse 46 orientierten schmalseitigen Endabschnitten 52a, 52b des Ankers 14 zugeordnet.

Der Anker 14 hat zweckmäßigerweise zumindest im Wesentlichen einen rechteckigen Umriss bei Betrachtung in Achsrichtung der Hauptachse 5. Er ist vorzugsweise länglich plattenförmig ausgebildet. Es ist allerdings möglich, dass der Anker 14 in den den Polflächen 36a, 36b gegenüberliegenden Bereichen über jeweils einen zum Flussleitkörper 28 hin ragenden Fortsatz verfügt, mit dem er jeweils in die Spuleneinrichtung 29 hineinragt.

Die Spuleneinrichtung 29 besteht beim Ausführungsbeispiel aus zwei Spuleneinheiten 29a, 29b, die jeweils einen der beiden Schenkelabschnitte 28a, 28b umschließen. Vorzugsweise sind die Spulendrähte der Spuleneinheiten 29a, 29b jeweils unmittelbar auf den zugeordneten Schenkelabschnitt 28a, 28b aufgewickelt. Damit verbunden ist eine Montageerleichterung insbesondere dann, wenn die Schenkelabschnitte 28a, 28b eigenständige Schenkelkörper sind, die im bereits mit einer Spuleneinheit 29a, 29b bestückten Zustand mit dem Stegabschnitt 28c zur Ausbildung des Flussleitkörpers 28 kombiniert werden.

Der Anker 14 verfügt über eine ihn außen begrenzende, rechtwinkelig zur Hauptachse 5 orientierte umlaufende Seitenfläche 53. Exemplarisch setzt sich diese Seitenfläche 53 zusammen aus zwei einander entgegengesetzt in Achsrichtung der Längsachse 46 orientierten kurzen Seitenflächenabschnitten 53a, 53b und zwei rechtwinkelig dazu orientierten langen Seitenflächenabschnitten 53c, 53d, die in Achsrichtung einer zu der Längsachse 46 rechtwinkeligen Querachse 47 des Ankers 14 orientiert sind.

Die bereits angesprochenen Federmittel 24 enthalten eine rahmenförmig strukturierte Blattfeder 54. Vorzugsweise sind die Federmittel 24 ausschließlich von einer solchen rahmenförmigen Blattfeder 54 gebildet.

Die rahmenförmige Blattfeder 54 ist in einer den Anker 14 im Bereich seiner Seitenfläche 53 umrahmenden Weise angeordnet. Sie ist zweckmäßigerweise gemeinsam mit dem Anker 14 in der Ventilkammer 13 aufgenommen. Bezogen auf die Achsrichtung der Hauptachse 5 liegen die Blattfeder 54 und der Anker 14 zweckmäßigerweise zumindest im Wesentlichen auf gleicher Höhe.

Die rahmenförmige Blattfeder 54 hat eine Längsachse 57 und eine hierzu rechtwinkelige Querachse 58. Ihre Längsachse 57 verläuft parallel zur Längsachse 46 des Ankers 14, während ihre Querachse 58 parallel zur Längsachse 47 des Ankers 14 ausgerichtet ist.

Die rahmenförmige Blattfeder 54 setzt sich zweckmäßigerweise aus vier einstückig miteinander verbundenen Rahmenschenkeln zusammen, die im Folgenden als Federschenkel bezeichnet seien. Dabei liegen sich zwei erste Federschenkel 55a, 55b unter Bildung eines ersten Federschenkelpaares in Achsrichtung der Querachse 58 gegenüber, während sich zwei zweite Federschenkel 56a, 56b unter Bildung eines zweiten Federschenkelpaares 56 in Achsrichtung der Längsachse 57 gegenüberliegen.

In einer Draufsicht in Achsrichtung der Hauptachse 5 gesehen, hat die Blattfeder 54 zweckmäßigerweise eine zumindest im Wesentlichen rechteckige Rahmenstruktur.

Entsprechend der Längsgestalt des Ankers 14 hat exemplarisch auch die Blattfeder 54 eine Längsgestalt. Dabei sind die ersten Federschenkel 55a, 55b länger als die zweiten Federschenkel 56a, 56b. Die längeren ersten Federschenkel 55a, 55b erstrecken sich entlang den langen Seitenflächenabschnitten 53c, 53d des Ankers 14, während sich die kürzeren zweiten Federschenkel 56a, 56b entlang den kurzen Seitenflächenabschnitten 53a, 53b des Ankers 14 erstrecken.

Eines der beiden Federschenkelpaare 55 oder 56 ist nun am Ventilgehäuse 2 fixiert, während das andere Federschenkelpaar 56 bzw. 55 an dem beweglichen Anker 14 angreift, so dass der Anker 14 durch die Blattfeder 54 bezüglich des Ventilgehäuses 2 in Richtung der erwähnten Grundstellung federnd vorgespannt ist.

Prinzipiell kann die Blattfeder 54 entweder über das erste Federschenkelpaar 55 oder über das zweite Federschenkelpaar 56 am Ventilgehäuse 2 fixiert sein. Als besonders vorteilhaft wird allerdings die beim Ausführungsbeispiel realisierte Variante angesehen, bei der die gehäuseseitige Fixierung über das sich aus den längeren ersten Federschenkeln 55a, 55b zusammensetzende erste Federschenkelpaar 55 erfolgt. Die weitere Beschreibung orientiert sich an dieser Ausführungsform, wobei anzumerken ist, dass entsprechende Ausführungen auch für die umgekehrte Anordnung gelten.

Somit sind beim Ausführungsbeispiel die die beiden Längsseiten, also die langen Seitenflächenabschnitte 53c, 53d des Ankers 14 flankierenden ersten Federschenkel 55a, 55b in jeweils einem als Befestigungsabschnitt 59 bezeichneten Bereich ortsfest bezüglich des Ventilgehäuses 2 fixiert, während die die beiden Schmalseiten, also die kurzen Seitenflächenabschnitte 53a, 53b des Ankers 14 flankierenden Federschenkel 56a, 56b von der Polflächenanordnung 36 weg in Richtung der Grundstellung mit einer Federkraft auf den Anker 14 einwirken.

Die Befestigungsabschnitte 59 befinden sich zweckmäßigerweise im längsmittigen Bereich des jeweiligen ersten Federschenkels 55a, 55b. Jeder erste Federschenkel 55a, 55b stützt sich mit seinem Befestigungsabschnitt 59 an einer der Polflächenanordnung 36 zugewandten Bodenfläche 63 der Ventilkammer 13 ab, die beim Ausführungsbeispiel näher bei der Polflächenanordnung 36 liegt als der die Kanalmündung 19 aufweisende Boden 17.

Bevorzugt stellt der Boden 17 den Grund eines Ventilkammerabschnittes 13' dar, der bezüglich eines sich daran in Richtung zu der Polflächenanordnung 36 anschließenden weiteren Ventilkammerabschnittes 13" einen kleineren Querschnitt hat, so dass die beiden Ventilkammerabschnitte 13', 13" abgestuft ineinander übergehen. Der Ventilkammerabschnitt 13" größeren Querschnittes hat eine der Polflächenanordnung 36 zugewandte Bodenfläche 63, die die der Polflächenanordnung 36 zugewandte Mündung des Ventilkammerabschnittes 13' kleineren Querschnittes umrahmt. Während der Anker 14 in dem Ventilkammerabschnitt 13" größeren Querschnittes angeordnet ist, ragt das Ventilglied 12 in den Ventilkammerabschnitt 13' kleineren Querschnittes hinein.

Die Blattfeder 54 stützt sich mit ihren Befestigungsabschnitten 59 auf einander entgegengesetzten Seiten des Ankers 36 an der Bodenfläche 63 ab und ist durch Befestigungsmittel 64 im Bereich der Befestigungsabschnitte 59 an dem die Bodenfläche 63 definierenden Bestandteil des Kanalkörpers 3 fixiert. Exemplarisch ist dies durch eine Reibschweißverbindung realisiert. Hierzu ist in jedem der beiden Befestigungsabschnitte 59 ein Loch ausgebildet, durch das ein von der Befestigungsfläche 63 hochragender Befestigungsfortsatz 65 hindurchragt, der einen durch Reibschweißen verdickten Kopf hat, durch den der Befestigungsabschnitt 59 an die Bodenfläche 63 angepresst wird. Strichpunktiert sind die Befestigungsfortsätze 65 jeweils im nicht verschweißten Ausgangszustand angedeutet.

Es versteht sich, dass die beiden ersten Federschenkel 55a, 55b an ihren Befestigungsabschnitten 59 auch auf andere Weise am Ventilgehäuse 2 fixiert sein können, beispielsweise durch eine Schraubverbindung oder eine Nietverbindung. Vorteilhaft ist jedenfalls, wenn die Blattfeder 54 gehäuseseitg nur an dem Kanalkörper 3 befestigt ist, so dass ihre Befestigung vom Antriebskopf 4 unabhängig ist und der Antriebskopf 4 abgenommen werden kann, ohne dass sich die Blattfeder 54 vom Kanalkörper 3 löst.

Beide gehäusefest fixierten ersten Federschenkel 55a, 55b erstrecken sich ausgehend von ihrem fixierten Befestigungsabschnitt 59 sowohl in Achsrichtung der Längsachse 57 nach außen als auch gleichzeitig in Richtung zum Arbeitskopf 4. Hierzu sind die beiden ersten Federschenkel 55a, 55b entsprechend gebogen, insbesondere zumindest im Wesentlichen mit einer Wölbung, deren konkave Seite der Polflächenanordnung 36 zugewandt ist.

Mithin liegen die an den Endabschnitten der ersten Federschenkel 55a, 55b angeordneten zweiten Federschenkel 56a, 56b näher bei der Polflächenanordnung 36 als die Befestigungsabschnitte 59. Mit anderen Worten sind die beiden zweiten Federschenkel 56a, 56b beim Ausführungsbeispiel der Bodenfläche 63 mit Abstand vorgelagert.

Der von der Blattfeder 54 umrahmte Anker 36 verfügt im Bereich seiner beiden schmalseitigen Endabschnitte 52a, 52b über jeweils eine in Achsrichtung der Hauptachse 5 zu der Polflächenanordnung 36 weisende Abstützfläche 66a, 66b, die vom zugeordneten zweiten Federschenkel 56a, 56b übergriffen wird, der dabei an der zugeordneten Abstützfläche 66a, 66b von der Seite der Polflächenanordnung 36 her anliegt. Bevorzugt ist jede Abstützfläche 66a, 66b Bestandteil eines in Längsrichtung von dem Anker 14 wegragenden Abstützvorsprunges 67.

Vorzugsweise ist die Blattfeder 54 so ausgebildet, dass sie beim Einbau aus ihrer Neutralposition elastisch verformt wird, so dass der Anker 14 ständig einer Federvorspannung in Richtung der Grundstellung ausgesetzt ist.

Die Blattfeder 54 besteht zweckmäßigerweise aus Metall, insbesondere aus Federstahl. Allerdings ist auch eine Bauform aus einem entsprechend elastischen Kunststoffmaterial oder aus einem Verbundmaterial möglich.

Ist die Elektromagneteinrichtung 6 deaktiviert, wird das mit dem Anker 14 bewegungsgekoppelte Ventilglied 12 zweckmäßigerweise durch die Federkraft der Blattfeder 54 an den Ventilsitz 18 angedrückt, der die zu steuernde Kanalöffnung 19 des Ventilkanals 7 umrahmt. Auf diese Weise ist der Kanalkörper 3 gemeinsam mit dem Anker 14, dem Ventilglied 12 und der Blattfeder 54 zu einer Baueinheit zusammengefasst. Diese Baueinheit bleibt auch dann bestehen, wenn der Antriebskopf 4 abgenommen ist. Folglich besteht die vorteilhafte Möglichkeit einer Funktionsprüfung des fluidtechnischen Teils des Magnetventils 1 vor der Montage des Antriebskopfes 4.

Die Blattfeder 54 erstreckt sich zweckmäßigerweise ausschließlich in der Ventilkammer 13, wobei sie insbesondere nicht in die Steuereinheit 27 eintaucht und dort keinen Platz beansprucht, der der Ausbildung eines kräftigen Magnetfeldes abträglich wäre.

Bevorzugt übernimmt die Blattfeder 54 auch noch eine Führungsfunktion bezüglich des Ankers 14 bei dessen Hubbewegung 42. In diesem Zusammenhang kann die der Seitenfläche 53 des Ankers 14 zugewandte Innenfläche 68 der Blattfeder 54 zumindest partiell als Führungsfläche 69 ausgebildet sein, die den Anker 14 seitlich abstützt.

Die Führungsfläche 69 kann auch ein Verdrehen des beweglichen Ankers 14 um seine mit der Hauptachse 5 zusammenfallende Hochachse 73 verhindern.

Der Kanalkörper 3 kann einteilig oder mehrteilig ausgeführt sein. Beim Ausführungsbeispiel ist er mehrteilig konzipiert und enthält einen die Ventilkanäle 7, 8 sowie den Ventilsitz 18 aufweisenden ersten Kanalkörperteil 3a und ferner einen in Achsrichtung der Hauptachse 5 mit dem ersten Kanalkörperteil 3a zusammengefügten zweiten Kanalkörperteil 3b, der den beweglichen Anker 14 und das Ventilglied 22 aufnimmt. Alle Komponenten können beispielsweise durch Verbindungsklammern oder auch auf sonstige Weise aneinander fixiert sein.

## Patentansprüche

1. Magnetventil, mit einer Elektromagneteinrichtung (6), die einen in einem Ventilgehäuse (2) angeordneten, zu einer linearen Hubbewegung (42) antreibbaren Anker (14) aufweist, der einer Polflächenanordnung (36) der Elektromagneteinrichtung (6) vorgelagert ist, zu der hin er bei Aktivierung der Elektromagneteinrichtung (6) gezogen wird und der ein Ventilglied (12) antreibt oder bildet, wobei der Anker (14) eine Längsgestalt mit rechtwinkelig zu der Hauptachse (5) orientierter Längsachse (46) aufweist und durch Federmittel (24) des Magnetventils (1) in einer zu der Polflächenanordnung (36) beabstandeten Grundstellung gehalten ist, wobei die Federmittel (24) eine rahmenförmige Blattfeder (54) aufweisen, die den Anker (14) an seiner rechtwinkelig zur Hauptachse (5) orientierten Seitenfläche (53) flankiert und die zwei sich aus jeweils zwei gegenüberliegenden Federschenkeln (55a, 55b; 56a, 56b) zusammensetzende Federschenkelpaare (55, 56) aufweist, wobei die Federschenkel (55a, 55b) des einen Federschenkelpaares (55) am Ventilgehäuse (2) fixiert sind und die Federschenkel (56a, 56b) des anderen Federschenkelpaares (56) im Bereich einander quer zu der Hauptachse (5) gegenüberliegender Seitenflächenabschnitte (53a, 53b) des Ankers (14) auf den Anker (14) einwirken, **dadurch gekennzeichnet, dass** der Anker (14) an seiner rechtwinkelig zur Hauptachse (5) orientierten Seitenfläche (53) ringsum von der rahmenförmigen Blattfeder (54) umrahmt ist.

2. Magnetventil nach Anspruch 1, **dadurch gekennzeichnet, dass** die Elektromagneteinrichtung (6) über einen U-förmigen Flussleitkörper (28) verfügt, der zwei zueinander parallele Schenkelabschnitte (28a, 28b) aufweist, deren untereinander in die gleiche Richtung orientierte Stirnflächen die Polflächenanordnung (36) bilden und der zumindest partiell von einer bestrombaren Spuleneinrichtung (29) umgeben ist.

3. Magnetventil nach Anspruch 2, **dadurch gekennzeichnet, dass** die Spuleneinrichtung (29) zwei Spuleneinheiten (27) aufweist, die jeweils einen der beiden Schenkelabschnitte (28a, 28b) des Flussleitkörpers (28) umschließen.

4. Magnetventil nach einem der Ansprüche 1 bis 3, **dadurch gekennzeichnet, dass** der Anker (14) zumindest in dem von der Blattfeder (54) umrahmten Bereich länglich plattenförmig ausgebildet ist, wobei er zweckmäßigerweise einen zumindest im Wesentlichen rechteckigen Umriss hat.

5. Magnetventil nach einem der Ansprüche 1 bis 4, **dadurch gekennzeichnet, dass** die Blattfeder (54) in Achsrichtung der Hauptachse (5) gesehen eine rechteckige Rahmenstruktur aufweist.

6. Magnetventil nach einem der Ansprüche 1 bis 5, **dadurch gekennzeichnet, dass** die Blattfeder (54) eine Längsgestalt hat, wobei die Federschenkel (55a, 55b) des einen Federschenkelpaares (55) länger sind als die Federschenkel (56a, 56b) des anderen Federschenkelpaares (56) und wobei die längeren Federschenkel (55a, 55b) den Längsseiten und die kürzeren Federschenkel (56a, 56b) den Schmalseiten des Ankers (14) zugeordnet sind.

7. Magnetventil nach einem der Ansprüche 1 bis 6, **dadurch gekennzeichnet, dass** die die beiden Längsseiten des Ankers (14) flankierenden Federschenkel (55a, 55b) am Ventilgehäuse (2) fixiert sind und die die beiden Schmalseiten des Ankers (14) flankierenden Federschenkel (56a, 56b) zumindest im aus der Grundstellung ausgelenkten Zustand des Ankers (14) in Richtung der Grundstellung auf den Anker (14) einwirken.

8. Magnetventil nach einem der Ansprüche 1 bis 7, **dadurch gekennzeichnet, dass** die am Ventilgehäuse (2) fixierten Federschenkel (55a, 55b) in ihrem längsmittigen Bereich am Ventilgehäuse (2) fixiert sind und sich ausgehend von diesem fixierten Bereich (59) nach außen und zugleich in Richtung zu der Polflächenanordnung (36) erstrecken, wobei die mit dem Anker (14) zusammenwirkenden Federschenkel (56a, 56b) in Achsrichtung der Hauptachse (5) näher bei der Polflächenanordnung (36) liegen als die am Ventilgehäuse (2) fixierten Bereiche (59) der anderen Federschenkel (55a, 55b).

9. Magnetventil nach einem der Ansprüche 1 bis 8, **dadurch gekennzeichnet, dass** die am Ventilgehäuse (2) fixierten Federschenkel (55a, 55b), insbesondere zur Seite der Polflächenanordnung (36) hin, konkav gewölbt sind.

10. Magnetventil nach einem der Ansprüche 1 bis 9, **dadurch gekennzeichnet, dass** sich die mit dem Anker (14) zusammenwirkenden Federschenkel (56a, 56b) der Blattfeder (54) jeweils an einer in Achsrichtung der Hauptachse (5) der Polflächenanordnung (36) zugewandten Abstützfläche (66a, 66b) des Ankers (14) abstützen, die zweckmäßigerweise jeweils an einem Abstützvorsprung (67) des Ankers (14) ausgebildet ist.

11. Magnetventil nach einem der Ansprüche 1 bis 10, **dadurch gekennzeichnet, dass** die der Seitenfläche (53) des Ankers (14) zugewandte Innenfläche (68) der Blattfeder (54) zumindest partiell eine den Anker (14) seitlich abstützende und bei Ausführung der Hubbewegung (42) führende Führungsfläche (69) bildet.

12. Magnetventil nach einem der Ansprüche 1 bis 11, **dadurch gekennzeichnet, dass** dem Ventilglied (12) mindestens eine zu steuernde Kanalöffnung (19) eines das Ventilgehäuse (2) durchsetzenden Ventilkanals (7) zugeordnet ist.

13. Magnetventil nach einem der Ansprüche 1 bis 12, **dadurch gekennzeichnet, dass** dem Ventilglied (12) ein eine zu steuernde Kanalöffnung (19) eines Ventilkanals (7) umrahmender Ventilsitz (18) gegenüberliegt, an den das Ventilglied (12) andrückbar ist, wobei das Ventilglied (12) zweckmäßigerweise in seiner Grundstellung durch die Blattfeder (54) an den Ventilsitz (18) angedrückt wird.

14. Magnetventil nach einem der Ansprüche 1 bis 13, **dadurch gekennzeichnet, dass** das Ventilgehäuse (2) einen Kanalkörper (3) aufweist, der von mindestens einem durch das Ventilglied (12) steuerbaren Ventilkanal (7) durchsetzt ist und der mit dem Anker (14), dem Ventilglied (12) und der Blattfeder (54) zu einer Baueinheit zusammengefasst ist, indem die Blattfeder (54) an dem Kanalkörper (3) fixiert ist und der Anker (14) gemeinsam mit dem Ventilglied (12) zwischen der Blattfeder (54) und dem Kanalkörper (3) federelastisch eingespannt ist.

15. Magnetventil nach einem der Ansprüche 1 bis 14, **dadurch gekennzeichnet, dass** es einen an den Kanalkörper (3) angebauten Antriebskopf (4) aufweist, der mit Ausnahme des Ankers (14) die Elektromagneteinheit (6) aufweist und der unabhängig von der Blattfeder (54) an dem Kanalkörper (3) befestigt ist.

## Claims

1. Solenoid valve with an electromagnet device (6) which has an armature (14), mounted in a valve casing (2) and drivable to make a linear stroke movement (42), which is arranged in front of a pole-face arrangement (36) of the electromagnet device (6) to which it is drawn on activation of the electromagnet device (6) and which drives or forms a valve member (12), wherein the armature (14) has an elongated shape with a longitudinal axis (46) oriented at right-angles to the main axis (5) and is held by spring means (24) of the solenoid valve (1) in a basic position at a distance from the pole-face arrangement (36), wherein the spring means (24) have a frame-like leaf spring (54) which flanks the armature (14) on its side face (53) oriented at right-angles to the main axis (5) and which has two spring limb pairs (55, 56), each comprised of two opposite spring limbs (55a, 55b; 56a, 56b), wherein the spring limbs (55a, 55b) of the one spring limb pair (55) are fixed to the valve casing (2) and the spring limbs (56a, 56b) of the other spring limb pair (56) act on the armature (14) in the area of side face sections (53a, 53b) of the armature (14) lying opposite one another transversely to the main axis (5), **characterised in that** the armature (14) is surrounded all round by the frame-like leaf spring (54) on its side face (53) oriented at right-angles to the main axis (5).

2. Solenoid valve according to claim 1, **characterised in that** the electromagnet device (6) has a U-shaped flux concentrating body (28) which has two parallel limb sections (28a, 28b), the end faces of which, oriented in the same direction, form the pole-face arrangement (36), and which is encompassed at least partly by a coil device (29) which may be energised.

3. Solenoid valve according to claim 2, **characterised in that** the coil device (29) has two coil units (27), each enveloping one of the two limb sections (28a, 28b) of the flux concentrating body (28).

4. Solenoid valve according to any of claims 1 to 3, **characterised in that** the armature (14) has an elongated plate shape, at least in the area surrounded by the leaf spring (54), wherein it expediently has a rectangular outline, at least substantially.

5. Solenoid valve according to any of claims 1 to 4, **characterised in that** the leaf spring (54) has a rectangular frame structure, viewed in the axial direction of the main axis (5).

6. Solenoid valve according to any of claims 1 to 5, **characterised in that** the leaf spring (54) has an elongated shape, wherein the spring limbs (55a, 55b) of the one spring limb pair (55) are longer than the spring limbs (56a, 56b) of the other spring limb pair (56), and wherein the longer spring limbs (55a, 55b) are assigned to the long sides and the shorter spring limbs (56a, 56b) to the narrow sides of the armature (14).

7. Solenoid valve according to any of claims 1 to 6, **characterised in that** spring limbs (55a, 55b) flanking the two long sides of the armature (14) are fixed to the valve casing (2), and the spring limbs (56a, 56b) flanking the two narrow sides of the armature (14) act in the direction of the basic position of the armature (14), at least when deflected out of the basic position of the armature (14).

8. Solenoid valve according to any of claims 1 to 7, **characterised in that** the spring limbs (55a, 55b) fixed to the valve casing (2) are fixed to the valve casing (2) in their longitudinal centre area and extend from this fixed area (59) outwards and at the same time in the direction of the pole-face arrangement (36), wherein the spring limbs (56a, 56b) interacting with the armature (14) lie closer to the pole-face arrangement (36) in the axial direction of the main axis (5) than the areas of the other spring limbs (55a, 55b) fixed to the valve casing (2).

9. Solenoid valve according to any of claims 1 to 8, **characterised in that** the spring limbs (55a, 55b) fixed to the valve casing (2) are concavely curved, in particular towards the side of the pole-face arrangement (36).

10. Solenoid valve according to any of claims 1 to 9, **characterised in that** the spring limbs (56a, 56b) of the leaf spring (54) interacting with the armature (14) in each case rest on a support face (66a, 66b) of the armature (14) facing in the axial direction of the main axis (5) of the pole-face arrangement (36) and expediently formed in each case on a support projection (67) of the armature (14).

11. Solenoid valve according to any of claims 1 to 10, **characterised in that** the inner face (68) of the leaf spring (54) facing the side face (53) of the armature (14) forms at least partly a guide face (69) supporting the armature (14) at the side and guiding it in the execution of the stroke movement (42).

12. Solenoid valve according to any of claims 1 to 11, **characterised in that** the valve member (12) is assigned at least one valve passage (7) passing through a passage opening (19) of the valve casing (2) which is to be controlled.

13. Solenoid valve according to any of claims 1 to 12, **characterised in that** there is lying opposite the valve member (12) a valve seat (18) surrounding a passage opening (19) of a valve passage (7) to be controlled and against which the valve member (12) may be pressed, wherein the valve member (12) is expediently in its basic position pressed against the valve seat (18) by the leaf spring (54).

14. Solenoid valve according to any of claims 1 to 13, **characterised in that** the valve casing (2) has a passage body (3), through which passes at least one valve passage (7) controllable by the valve member (12) and which is combined into a unit together with the armature (14), the valve member (12) and the leaf spring (54), by fixing the leaf spring (54) to the passage body (3) and spring-elastic clamping of the armature (14) together with the valve member (12) between the leaf spring (54) and the passage body (3).

15. Solenoid valve according to any of claims 1 to 14, **characterised in that** it has on the passage body (3) an attached drive head (4), which has the electromagnet device (6) except for the armature (14) and which is fixed to the passage body (3) independently of the leaf spring (54).

## Revendications

1. Electrovanne, avec un dispositif électromagnétique (6), qui présente un induit (14) disposé dans un carter de vanne (2), pouvant être entraîné aux fins d'un déplacement de levage (42) linéaire, lequel induit est monté en amont d'un ensemble de faces polaires (36) du dispositif électromagnétique (6), en direction de laquelle il est tiré lors de l'activation du dispositif électromagnétique (6), et lequel entraîne ou forme un organe de vanne (12), dans laquelle l'induit (14) présente une forme longitudinale avec un axe longitudinal (46) orienté à angle droit par rapport à l'axe principal (5) et est maintenu par des moyens de ressort (24) de l'électrovanne (1), dans une position de base espacée de l'ensemble de faces polaires (36), dans laquelle les moyens de ressort (24) présentent un ressort à lames (54) en forme de cadre, qui flanque l'induit (14) au niveau de sa face latérale (53) orientée à angle droit par rapport à l'axe principal (5) et qui présente deux paires de branches de ressort (55, 56) se composant respectivement de deux branches de ressort (55a, 55b ; 56a, 56b) se faisant face, dans laquelle les branches de ressort (55a, 55b) de l'une des paires de branches de ressort (55) sont fixées au niveau du carter de vanne (2) et les branches de ressort (56a, 56b) de l'autre paire de branches de ressort (56) agissent sur l'induit (14) dans la zone de sections de faces latérales (53a, 53b), se faisant face les unes les autres de manière transversale par rapport à l'axe principal (5), de l'induit (14), **caractérisée en ce que** l'induit (14) est encadré, au niveau de sa face latérale (53) orientée à angle droit par rapport à l'axe principal (5), tout autour par le ressort à lames (54) en forme de cadre.

2. Electrovanne selon la revendication 1, **caractérisée en ce que** le dispositif électromagnétique (6) dispose d'un corps d'acheminement de flux (28) en forme de U, qui présente deux sections de branche (28a, 28b) parallèles l'une à l'autre, dont les faces frontales orientées les unes les autres dans la même direction forment l'ensemble de faces polaires (36), et qui est entouré au moins en partie par un dispositif de bobine (29) pouvant être alimenté en courant.

3. Electrovanne selon la revendication 2, **caractérisée en ce que** le dispositif de bobine (29) présente deux unités de bobine (27), qui renferment respectivement une des deux sections de branche (28a, 28b) du corps d'acheminement de flux (28).

4. Electrovanne selon l'une quelconque des revendications 1 à 3, **caractérisée en ce que** l'induit (14) est réalisé au moins dans la zone encadrée par le ressort à lames (54) de manière à présenter une forme de plaque en longueur, dans laquelle il est doté de manière appropriée d'un contour au moins sensiblement rectangulaire.

5. Electrovanne selon l'une quelconque des revendications 1 à 4, **caractérisée en ce que** le ressort à lames (54) présente, vu dans la direction axiale de l'axe principal (5), une structure de cadre rectangulaire.

6. Electrovanne selon l'une quelconque des revendications 1 à 5, **caractérisée en ce que** le ressort à lames (54) est doté d'une forme longitudinale, dans laquelle les branches de ressort (55a, 55b) de l'une des paires de branches de ressort (55) sont plus longues que les branches de ressort (56a, 56b) de l'autre paire de branches de ressort (56) et dans laquelle les branches de ressort (55a, 55b) plus longues sont associées à des côtés longitudinaux et les branches de ressort (56a, 56b) plus courtes sont associés aux côtés étroits de l'induit (14).

7. Electrovanne selon l'une quelconque des revendications 1 à 6, **caractérisée en ce que** les branches de ressort (55a, 55b) flanquant les deux côtés longitudinaux de l'induit (14) sont fixées au niveau du carter de vanne (2), et les branches de ressort (56a, 56b) flanquant les deux côtés étroits de l'induit (14) agissent sur l'induit (14) au moins dans l'état dévié hors de la position de base de l'induit (14), en direction de la position de base.

8. Electrovanne selon l'une quelconque des revendications 1 à 7, **caractérisée en ce que** les branches de ressort (55a, 55b) fixées au niveau du carter de vanne (2) sont fixées dans leur zone médiane longitudinale au niveau du carter de vanne (2) et s'étendent vers l'extérieur en partant de ladite zone (59) fixée et dans le même temps en direction de l'ensemble de faces polaires (36), dans laquelle les branches de ressort (56a, 56b) coopérant avec l'induit (14) se trouvent dans la direction axiale de l'axe principal (5) davantage à proximité de l'ensemble de faces polaires (36) que les zones (59), fixées au niveau du carter de vanne (2), des autres branches de ressort (55a, 55b).

9. Electrovanne selon l'une quelconque des revendications 1 à 8, **caractérisée en ce que** les branches de ressort (55a, 55b) fixées au niveau du carter de vanne (2) sont bombées de manière concave, en particulier en direction du côté de l'ensemble de faces polaires (36).

10. Electrovanne selon l'une quelconque des revendications 1 à 9, **caractérisée en ce que** les branches de ressort (56a, 56b), coopérant avec l'induit (14), du ressort à lames (54) prennent appui respectivement au niveau d'une face d'appui (66a, 66b), tournée dans la direction axiale de l'axe principal (5) de l'ensemble de faces polaires (36), de l'induit (14), laquelle est réalisée de manière appropriée respectivement au niveau d'une partie faisant saillie d'appui (67) de l'induit (14).

11. Electrovanne selon l'une quelconque des revendications 1 à 10, **caractérisée en ce que** la face intérieure (68), tournée vers la face latérale (53) de l'induit (14), du ressort à lames (54) forme au moins en partie une face de guidage (69) soutenant latéralement l'induit (14) et effectuant un guidage lors de l'exécution du déplacement de levage (42).

12. Electrovanne selon l'une quelconque des revendications 1 à 11, **caractérisée en ce qu'**au moins une ouverture de canal (19) à commander d'un canal de vanne (7) traversant le carter de vanne (2) est associée à l'organe de vanne (12).

13. Electrovanne selon l'une quelconque des revendications 1 à 12, **caractérisée en ce qu'**un siège de vanne (18) encadrant une ouverture de canal (19) à commander d'un canal de vanne (7) fait face à l'organe de vanne (12), contre duquel l'organe de vanne (12) peut être pressé, dans laquelle l'organe de vanne (12) est pressé de manière appropriée dans sa position de base par le ressort à lames (54) contre le siège de vanne (18).

14. Electrovanne selon l'une quelconque des revendications 1 à 13, **caractérisée en ce que** le carter de vanne (2) présente un corps de canal (3), qui est traversé par au moins un canal de vanne (7) pouvant être commandé par l'organe de vanne (12) et qui est assemblé à l'induit (14), à l'organe de vanne (12) et au ressort à lames (54) afin de former une unité modulaire **en ce que** le ressort à lames (54) est fixé au niveau du corps de canal (3) et l'induit (14) est enserré de manière élastique conjointement avec l'organe de vanne (12) entre le ressort à lames (54) et le corps de canal (3).

15. Electrovanne selon l'une quelconque des revendications 1 à 14, **caractérisée en ce qu'**elle présente une tête d'entraînement (4) montée au niveau du corps de canal (3), laquelle présente, à l'exception de l'induit (14), l'unité électromagnétique (6) et qui est fixée au niveau du corps de canal (3) indépendamment du ressort à lames (54).
